# EUROPÄISCHE PATENTSCHRIFT

(11) **EP 0 525 609 B1**
(45) Veröffentlichungstag und Bekanntmachung des Hinweises auf die Patenterteilung: **19.06.1996**
(21) Anmeldenummer: 92112508.4
(22) Anmeldetag: 22.07.1992
(51) Int. Cl.: A61C 7/10

(54) **Halter für eine Vorrichtung zur Korrektur der Zahnstellung**
Support for a tooth position correcting device
Support pour un dispositif correcteur de denture

(30) Priorität: 01.08.1991 DE 4125439
(43) Veröffentlichungstag der Anmeldung: 03.02.1993
(73) Patentinhaber: DENTAURUM J.P. WINKELSTROETER KG, D-75228 Ispringen (DE)
(72) Erfinder: Ehrenberger,Walter, 7539 Kämpfelbach-Ersingen (DE)
(74) Vertreter: Haecker, Walter

(56) Entgegenhaltungen:
- DE-A- 1 466 949
- DE-U- 1 742 489
- DE-U- 7 113 744

## Beschreibung

Die Erfindung betrifft eine Einrichtung zum Einbetten einer Dehnschraube zur Korrektur der Zahnstellung in eine Kunststoffplatte, ein Einbettverfahren sowie eine Dehnschraube mit Halter zur Durchführung eines solchen Verfahrens.

Dehnschrauben werden von Kieferorthopäden bei der Behandlung von Patienten dazu eingesetzt, Kräfte auf einen Kiefer, auf einzelne Zähne oder auf Gruppen von Zähnen auszuüben, um damit Zahnstellungen zu korrigieren, gegebenenfalls über eine Änderung der Kieferform. Manche dieser Dehnschrauben werden zu diesem Zweck in eine insbesondere aus einem Gießharz herzustellende Kunststoffplatte eingebettet, die in ihrer Form an den Gaumen angepaßt ist und überlicherweise auf einem durch Abformen des Gaumens gewonnenen Gipsmodell modelliert wird. In diese Kunststoffplatte werden auch meist drahtförmige Befestigungselemente eingebettet, mit denen die Platte an Zähnen verankert werden kann, um die von der Dehnschraube erzeugten Kräfte an den Zähnen wirksam werden zu lassen.

Dehnschrauben haben meist einen aus zwei Teilen bestehenden Dehnschraubenkörper und eine Gewindespindel, die zu beiden Seiten eines ihrer Betätigung dienenden Spindelkopfs mit gegenläufigen Gewinden versehen ist, um durch Drehen der Gewindespindel die beiden Dehnschraubenkörperteile auseinanderfahren oder zusammenziehen zu können.

Um die Dehnschraube bei der Herstellung der Kunststoffplatte richtig und einfach im Kunststoff positionieren zu können, sind bekannte Dehnschrauben mit einem Halter in Form eines flachen, als Spritzgußteil hergestellten Kunststoffplättchens versehen, welches aber auch noch eine zweite Aufgabe zu erfüllen hat: es deckt den Spalt zwischen den beiden Dehnschraubenkörperteilen ab und verhindert so, daß der während des Einbettens noch flüssige Kunststoff in die Bohrungen der beiden Dehnschraubenkörperteile eindringen und an den Kopf der Gewindespindel gelangen kann, so daß die Dehnschraube funktionsfähig ist und insbesondere die Gewindespindel gedreht werden kann, nachdem der Halter durch Abbrechen und/oder Abschneiden von der Dehnschraube entfernt und die Kunststoffplatte durch einen längs des Spalts zwischen den beiden Dehnschraubenkörperteilen geführten Sägeschnitts in zwei Plattenteile aufgetrennt wurde.

Bei der bekannten Technologie wird der Halter vor dem Aufbringen des Kunststoffs auf die der Herstellung der Kunststoffplatte dienende Gipsform auf dieser befestigt; zu diesem Zweck wird derjenige Bereich des Halters, der dann gegen die Form angelegt wird, der Gaumenform angepaßt, indem sein Kantenbereich mit einem Seitenschneider oder einem ähnlichen Werkzeug bearbeitet wird. Dann wird der Halter samt Dehnschraube mittels eines Klebewachses in der gewünschten Position auf der Form befestigt. Die Praxis hat aber gezeigt, daß damit eine sichere und für die Herstellung der Kunststoffplatte hinreichend dauerhafte Fixierung des Halters und damit der Dehnschraube an der Form, d. h. also dem Gipsmodell, oft nicht gewährleistet ist.

Eine Dehnschraube der vorstehend beschriebenen Art, deren Körper passend in eine entsprechend gestaltete Öffnung eines plättchenförmigen Halters eingesetzt ist, geht z. B. aus dem Prospektblatt der Firma LEONE für deren Dehnschraube des Typs A0800 hervor; der Halter dieser Dehnschraube bildet oberhalb der letzteren einen Halteabschnitt zum Erfassen des Halters zwischen zwei Fingern und unterhalb der Dehnschraube einen ungefähr trapezförmigen zweiten Abschnitt zum Aufsetzen auf die formgebende Oberfläche der Gießform.

Aus dem DE-U-1 742 489 geht ein plättchenförmiger Halter hervor, welcher eine ungefähr T-förmige Gestalt hat; der senkrechte Schenkel des Halters bildet einen als Abreißlasche bezeichneten Halteabschnitt zum Erfassen des Halters, und im hierzu quer verlaufenden Bereich des Halters sind eine mittlere Öffnung und zwei seitliche Öffnungen vorgesehen, in denen eine Gewindespindel bzw. zwei Stifte gehalten sind, welche den eigentlichen Dehnschraubenmechanismus bilden.

Der Erfindung lag deshalb die Aufgabe zugrunde, die Positioniergenauigkeit der mit einem Halter versehenen Dehnschraube auf der der Herstellung der Kunststoffplatte dienenden Form zu verbessern.

Zur Lösung der gestellten Aufgabe werden, ausgehend z. B. von der Dehnschraube des Typs A0800 der Firma LEONE, erfindungsgemäß eine Einrichtung nach Anspruch 1, ein Verfahren nach Anspruch 2 und eine Dehnschraube mit Halter nach Anspruch 3 vorgeschlagen.

Bei Verwendung einer erfindungsgemäßen Dehnschraube mit Halter muß der Kieferorthopäde oder Zahntechniker also nur mittels eines geeigneten Werkzeugs eine entsprechende Ausnehmung in der Form erzeugen, und zwar an derjenigen Stelle, über der später die Dehnschraube liegen soll, um dann den Halter mit seinem Vorsprung in dieser Ausnehmung zu befestigen. Bei der Handhabung der Form im Zuge der Herstellung der Kunststoffplatte können dann die Dehnschraube samt Halter weder wackeln, noch verrutschen; vielmehr verbleibt die Dehnschraube in der gewünschten Position an der Form.

Nachdem, wie oben bereits erwähnt, die bekannten Halter der in Rede stehenden Dehnschrauben üblicherweise als Kunststoff-Spritzgußteile hergestellt werden, ist es völlig problemlos, den Halter mit dem erfindungsgemäßen Vorsprung zu versehen, weshalb bei einer bevorzugten Ausführungsform der Vorsprung an das den Halter bildende Kunststoffplättchen angeformt ist - Halter samt Vorsprung lassen sich auch in diesem Fall als Kunststoffspritzgußteil herstellen.

Am einfachsten ist es, den Vorsprung zapfenförmig zu gestalten, weil dann nur mit Hilfe eines Bohrers ein Loch in die Form gebohrt zu werden braucht. Der Vorsprung kann aber auch anders gestaltet sein, er kann z. B. die Form einer flachen Zunge haben, wobei dann in die Form eben ein entsprechender schmaler Schlitz gefräst oder gesägt werden muß. Außerdem kann der Halter erfindungsgemäß auch mit mehreren Vorsprüngen versehen sein, z. B. mit mehreren Zapfen, die sich dann bei entsprechender Orientierung der zugehörigen Bohrungen in der Form in diesen verkanten oder verklemmen und so den Halter fest an der Form fixieren. Unter Umständen kann es sich aber empfehlen, und zwar insbesondere bei einem Halter mit nur einem einzigen, einfach gestalteten Vorsprung, die in der Form erzeugte Ausnehmung mit Klebewachs zu füllen und erst dann den Vorsprung des Halters in die Formausnehmung zu stecken; der Halter kann dann gegenüber der Form in seiner Höhe und Neigung sowie seiner Drehwinkelstellung bei einer Drehung um die Längsachse des Vorsprungs noch justiert werden, bis sich das Klebewachs verfestigt hat. Das Anbringen von Klebewachs zwischen Vorsprung und Form bringt noch den Vorteil mit sich, daß sich der Halter nach dem Aushärten der die Kunststoffplatte bildenden Kunststoffmasse leicht entfernen läßt, weil das Klebewachs ein Eindringen der Kunststoffmasse in die Formausnehmung verhindert. Natürlich muß in einem solchen Fall die Ausnehmung mit einem etwas größeren Querschnitt hergestellt werden, als dies dem Querschnitt des Haltervorsprungs entspricht, um außer dem Haltervorsprung auch noch Klebewachs in der Formausnehmung unterbringen zu können. Hat der Haltervorsprung die Gestalt eines Zapfens, so läßt sich der Halter samt Korrekturvorrichtung gegenüber der Form um die Zapfenachse auch beliebig drehen. Gerade für diesen Fall empfiehlt es sich, den Vorsprung mittig am Halter anzuordnen, d. h. daß die Zapfenachse senkrecht zur Bewegungsebene der Dehnschraubenkörperteile und durch den Kopf der Gewindespindel verläuft.

Um die Höhenlage des Halters und damit der Dehnschraube relativ zu der der Herstellung der Kunststoffplatte dienenden Form in einfacher Weise festzulegen, empfiehlt es sich, den Haltervorsprung zur Bildung eines mit der Formausnehmung zusammenwirkenden Anschlags zumindest an einer der Längsseiten des Vorsprungs mit einer solchen Stufe zu versehen, daß der Querschnitt des Vorsprungs vor dieser Stufe - in Richtung auf das freie Ende des Vorsprungs - kleiner als hinter dieser Stufe ist. Die gewünschte Höhenlage des Halters an der Form ergibt sich dann bei einer entsprechend gestalteten Formausnehmung automatisch, weil sich der Haltervorsprung nur bis zu dieser Stufe in die Formausnehmung einstecken läßt. Eine solche Stufe kann schon bei der Herstellung des Halters erzeugt werden; bevorzugt wird aber eine Vorgehensweise, bei der die Stufe erst im Zuge des Anbringens des Halters an der Form erzeugt wird, indem, z. B. mit einem Seitenschneider, ein entsprechendes Stück des Haltervorsprungs von diesem abgeschnitten wird.

Um die Formausnehmung nicht genau an den Haltervorsprung anpassen oder mit Klebewachs oder einem anderen geeigneten Klebstoff arbeiten zu müssen, ist bei einer bevorzugten Ausführungsform des erfindungsgemäßen Halters der Vorsprung zum klemmenden Halten in der Formausnehmung quer zu seiner Längsrichtung federnd nachgiebig gestaltet. Nach dem Einstecken des Haltervorsprungs in die Formausnehmung wird der Halter samt Dehnschraube dann zuverlässig in der gewünschten Position an der Form gehalten. Eine solche Ausführungsform läßt sich besonders einfach dann herstellen, wenn der Vorsprung mindestens an einer seiner Längsseiten einen sich ungefähr in Längsrichtung des Haltervorsprungs erstreckenden und quer hierzu federnden Steg aufweist. Dieser Steg kann sogar widerhakenförmig gestaltet werden, um so ein unbeabsichtigtes Herausziehen des Haltervorsprungs aus der Formausnehmung zu verhindern.

Die Erfindung soll nachfolgend anhand der beigefügten zeichnerischen Darstellung von vier besonders vorteilhaften Ausführungsformen der erfindungsgemäßen Dehnschraube noch näher erläutert werden; in der Zeichnung zeigen:
- Fig. 1:: Eine Draufsicht auf ein Gipsmodell zur Herstellung einer Kunststoffplatte, in die zwei erfindungsgemäße Dehnschrauben eingebettet werden sollen, und
- Fig. 2 - 5:: Frontansichten von vier erfindungsgemäßen Dehnschrauben, von denen jeweils nur der Dehnschraubenkörper sowie ein Teil des Halters schematisch dargestellt wurden.

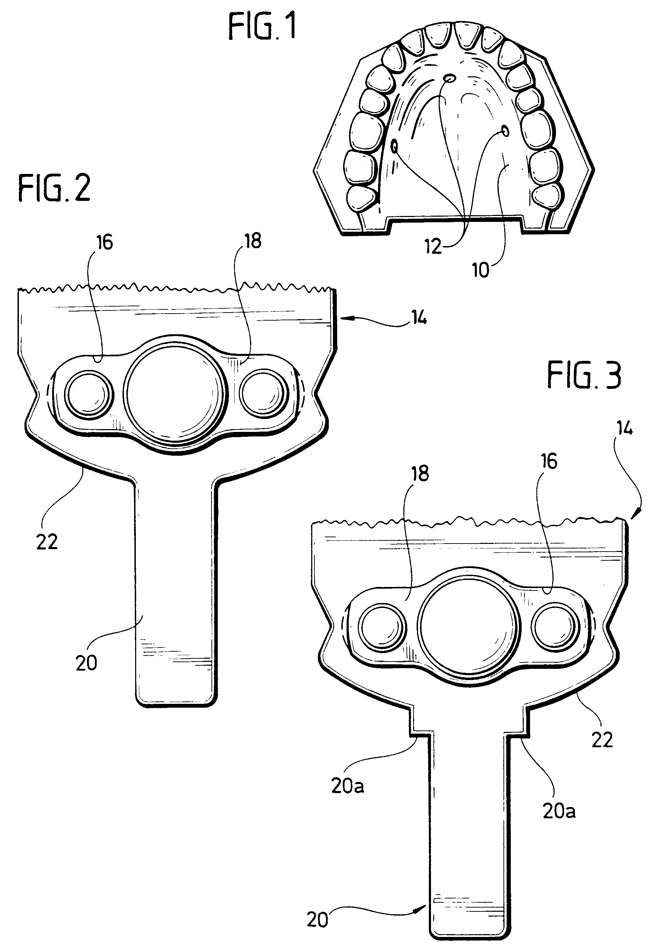

Die Fig. 1 zeigt ein als Form für die Herstellung einer Kunststoffplatte, einer sogenannten Gaumenplatte, verwendbares Gipsmodell, in dessen formgebende Oberfläche 10 zwei Ausnehmungen 12 in Form von Bohrungen eingebracht wurden, deren jede der Befestigung eines Dehnschraubenhalters an diesem Gipsmodell dient. Da die im folgenden noch zu beschreibenden Halter Vorsprünge in Form von Zapfen haben, deren Querschnitt nicht kreisrund, sondern quadratisch oder flach ist, können die beiden Ausnehmungen 12 sowohl kreiszylindrische Bohrungen sein, als auch einen ovalen Querschnitt haben, was sich leicht dadurch erreichen läßt, daß man den Bohrer im Gipsmodell geringfügig quer zur Bohrerachse bewegt.

Die Fig. 2 zeigt einen Dehnschraubenhalter 14, welcher z. B. als flaches, im Spritzgußverfahren hergestelltes Kunststoffplättchen ausgebildet ist und in einer Halteröffnung 16 einen Dehnschraubenkörper 18 einer Kieferdehnschraube aufnimmt. Die Halteröffnung 16 ist dabei recht exakt an die Kontur des Dehnschraubenkörpers 18 angepaßt und soll dadurch den Spalt zwischen den beiden Dehnschraubenkörperteilen abdecken und abdichten - die Kieferdehnschraube ragt, wie bei den bekannten Kieferdehnschrauben, senkrecht zur Zeichnungsebene nach vorn und hinten über den Halter 14 hinaus.

An den Halter 14 ist ein zapfenförmiger Vorsprung 20 angeformt, der sich in eine der Ausnehmungen 12 des in Fig. 1 gezeigten Gipsmodells einstecken und in dieser Ausnehmung, z. B. mittels Klebewachs, befestigen läßt, nachdem der Dehnschraubenhalter 14 winkelmäßig und in seiner Höhenlage relativ zum Gipsmodell in der gewünschten Position justiert wurde. Der in Fig. 2 gezeigte Halter 14 besitzt einen glatten Vorsprung 20, der sich bei entsprechender Herstellung der zugehörigen Ausnehmung 12 im Gipsmodell über seine ganze Länge in diese Ausnehmung einstecken läßt, bis der Halter 14 am Fuß seines Vorsprungs 20 mit seiner Kante 22 gegen die formgebende Oberfläche 10 des Gipsmodells anschlägt. Soll der Dehnschraubenkörper 18 mit einem etwas größeren Abstand von der formgebenden Oberfläche 10 des Gipsmodells an diesem angebracht werden, muß entweder die Ausnehmung 12 mit einer Tiefe hergestellt werden, die geringer als die Länge des Haltervorsprungs 20 ist, ein nicht ganz einfaches Vorgehen, oder man darf den Haltervorsprung 20 nicht ganz in die Ausnehmung 12 einstecken und muß ihn dann in dieser Position mit Klebewachs oder dergleichen fixieren.

Um eine gewünschte, vorgegebene Höhenlage der Dehnschraube über der formgebenden Oberfläche 10 des Gipsmodells auf einfachere Weise zu gewährleisten, empfiehlt sich die Verwendung des in Fig. 3 gezeigten Dehnschraubenhalters. In Fig. 3 wurden für dieselben Teile und Elemente dieselben Bezugszeichen wie in Fig. 2 verwendet, so daß im folgenden nur diejenigen Merkmale des in Fig. 3 gezeigten Halters 14 beschrieben werden, in denen er sich von dem in Fig. 2 gezeigten Halter 14 unterscheidet.

Der Vorsprung 20 des in Fig. 3 gezeigten Halters 14 ist an seinen einander gegenüberliegenden Längsseiten mit jeweils einer Stufe 20a versehen, so daß er bei entsprechender Bemessung der für diesen Halter vorgesehenen Ausnehmung 12 des Gipsmodells nur soweit in die Ausnehmung eingesteckt werden kann, bis die Stufen 20a an der formgebenden Oberfläche 10 des Gipsmodells zur Anlage kommen. Durch die Gestaltung des in Fig. 3 gezeigten Halters 14 wird also die Höhenlage des Dehnschraubenkörpers 18 über der formgebenden Oberfläche 10 festgelegt, so daß die Ausnehmung 12 ohne weiteres mit einer Tiefe hergestellt werden kann, die größer ist als die Länge des Haltervorsprungs 20.

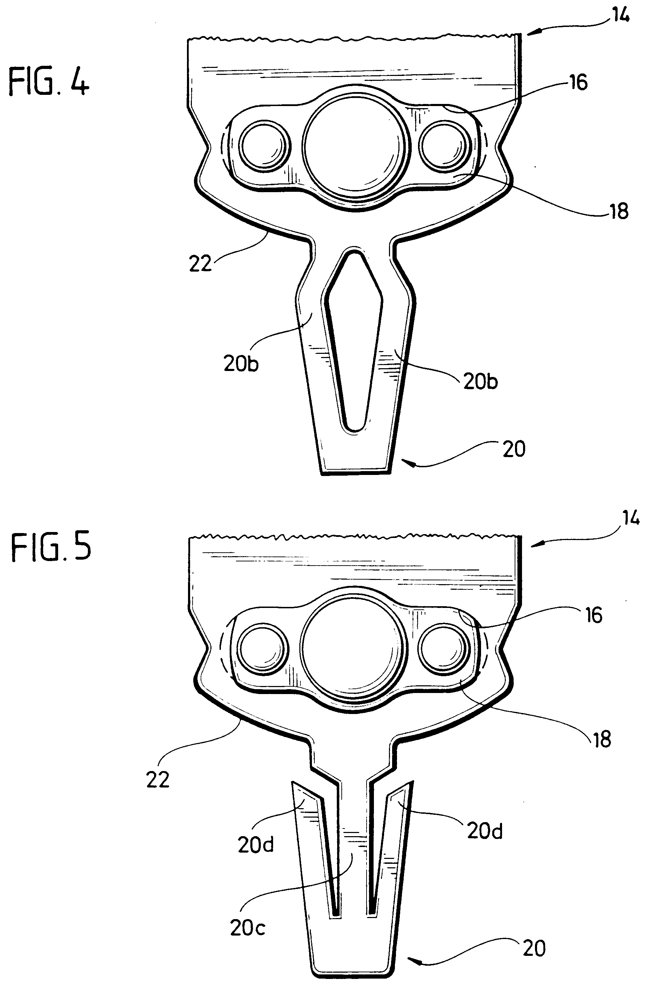

Auch der in Fig. 4 dargestellte Dehnschraubenhalter 14 unterscheidet sich von dem in Fig. 2 gezeigten Dehnschraubenhalter nur in der Gestaltung des Haltervorsprungs 20. Bei der Ausführungsform nach Fig. 4 wird der Haltervorsprung 20 von zwei Stegen 20b gebildet, welche sich quer zur Längsrichtung des Haltervorsprungs 20 zusammendrücken, d. h. aufeinanderzubewegen lassen, so daß bei entsprechender Dimensionierung der zugehörigen Ausnehmung 12 im Gipsmodell der Haltervorsprung 20 klemmend in dieser Ausnehmung angebracht werden kann.

Dies gilt auch für die Ausführungsform gemäß Fig. 5, bei der der Haltervorsprung 20 widerhakenförmig gestaltet ist. Er besitzt einen mittleren Steg 20c und zwei jeweils einen Widerhaken bildende Stege 20d, welche sich quer zur Längsrichtung des Haltervorsprungs 20 zusammendrücken, d. h. aufeinanderzubewegen lassen.

## Patentansprüche

1. Einrichtung zum Einbetten einer Dehnschraube (18) zur Korrektur der Zahnstellung in eine aus einem Gießharz auf einer Gießform zu bildende Kunststoffplatte, umfassend einen die Dehnschraube umfassenden und diese haltenden plättchenförmigen Kunststoffhalter (14) und eine Gießform, die eine an diejenige der herzustellenden Kunststoffplatte angepaßte, formgebende Oberfläche (10) aufweist, **dadurch gekennzeichnet,** daß zum Fixieren des Halters (14) an der Gießform der Halter einen Vorsprung (20) und die Gießform in ihrer formgebenden Oberfläche (10) eine Ausnehmung (12) zum Einstecken dieses Vorsprungs (20) aufweist.

2. Verfahren zum Einbetten einer mit einem Halter (14) versehenen Dehnschraube (18) zur Korrektur der Zahnstellung in eine aus einem Gießharz auf einer Gießform zu bildende Kunststoffplatte, wobei der Halter samt Dehnschraube auf einer formgebenden Oberfläche der Gießform in einer vorgegebenen Stellung fixiert und dann das Gießharz auf die Gießform gegeben wird, **dadurch gekennzeichnet,** daß in der formgebenden Gießformfläche eine Ausnehmung (12) zum Einstecken eines am Halter (14) vorgesehenen Vorsprungs (20) gebildet, sodann der Vorsprung (20) in diese Ausnehmung eingesteckt und schließlich das Gießharz auf die Gießform gegeben wird.

3. Dehnschraube mit Halter (14) zur Durchführung des Verfahrens nach Anspruch 2, wobei der Halter (14) als die Dehnschraube (18) umfassendes und letztere haltendes Kunststoffplättchen ausgebildet ist, das einen im Gebrauch auf der von der Gießform abgewandten Seite der Dehnschraube (18) befindlichen Halteabschnitt sowie auf der bezüglich der Dehnschraube dem Halteabschnitt gegenüberliegenden Seite einen zweiten Abschnitt aufweist, welcher sich im Gebrauch zwischen Dehnschraube (18) und der formgebenden Oberfläche (10) der Gießform befindet, **dadurch gekennzeichnet,** daß der Halter (14) auf der von der Dehnschraube (18) abgewandten Seite seines zweiten Abschnitts mit einem Vorsprung (20) zum Einstecken in die Gießformausnehmung (12) versehen ist.

4. Dehnschraube nach Anspruch 3, dadurch gekennzeichnet, daß der Vorsprung (20) an das den Halter bildende Kunststoffplättchen angeformt ist.

5. Dehnschraube nach Anspruch 3 oder 4, dadurch gekennzeichnet, daß der Vorsprung (20) zapfenförmig ausgebildet ist.

6. Dehnschraube nach einem oder mehreren der Ansprüche 3 bis 5, dadurch gekennzeichnet, daß der Vorsprung (20) zur Bildung eines mit der Ausnehmung (12) der Form zusammenwirkenden Anschlags zumindest an einer seiner Längsseiten eine solche Abstufung (20a) aufweist, daß sein Querschnitt vor dieser - in Richtung auf sein freies Ende - kleiner als hinter dieser Abstufung ist.

7. Dehnschraube nach einem oder mehreren der Ansprüche 3 bis 6, dadurch gekennzeichnet, daß der Vorsprung (20) zum klemmenden Halten in der Formausnehmung (12) quer zu seiner Längsrichtung federnd nachgiebig gestaltet ist.

8. Dehnschraube nach Anspruch 7, dadurch gekennzeichnet, daß der Vorsprung (20) mindestens an einer seiner Längsseiten einen sich ungefähr in Längsrichtung des Vorsprungs erstreckenden und quer hierzu federnden Steg (20b; 20d) aufweist.

9. Verfahren nach Anspruch 2, dadurch gekennzeichnet, daß zum Fixieren des Vorsprungs in der Formausnehmung in letztere eine aushärtende Masse eingebracht wird, worauf der Vorsprung in die Formausnehmung gesteckt und der Halter gegenüber der Form justiert wird.

## Claims

1. Device for embedding an expansion screw (18) for correction of the position of teeth in a plastic plate to be formed from a casting resin on a casting mould, comprising a small plate-shaped plastic holder (14) surrounding and holding the expansion screw, and a casting mould having a shaping surface (10) adapted to the surface of the plastic plate to be produced, **characterized in that** to fix the holder (14) on the casting mould, the holder has a projection (20) and the casting mould has a recess (12) in its shaping surface (10) for insertion of this projection (20) therein.

2. Method for embedding an expansion screw (18) provided with a holder (14) for correction of the position of teeth in a plastic plate to be formed from a casting resin on a casting mould, wherein the holder together with the expansion screw is fixed in a predetermined position on a shaping surface of the casting mould, and the casting resin is then introduced into the casting mould, **characterized in that** a recess (12) for insertion of a projection (20) provided on the holder (14) is formed in the shaping surface of the casting mould, the projection (20) is then inserted in this recess and finally the casting resin is introduced into the casting mould.

3. Expansion screw with holder (14) for performing the method as defined in claim 2, the holder (14) being designed as a small plastic plate surrounding and holding the expansion screw (18), the small plastic plate having a holding section located on the side of the expansion screw (18) facing away from the casting mould during use and on the side opposite the holding section with respect to the expansion screw a second section which is located between expansion screw (18) and the shaping surface (10) of the casting mould during use, **characterized in that** on the side of its second section facing away from the expansion screw (18) the holder (14) is provided with a projection (20) for insertion in the recess (12) of the casting mould.

4. Expansion screw as defined in claim 3, characterized in that the projection (20) is integrally formed on the small plastic plate forming the holder.

5. Expansion screw as defined in claim 3 or 4, characterized in that the projection (20) is of pin-shaped design.

6. Expansion screw as defined in one or several of claims 3 to 5, characterized in that to form a stop cooperating with the recess (12) of the mould, the projection (20) has at least on one of its longitudinal sides such a shoulder (20a) that its cross section in front of this shoulder - in the direction towards its free end - is smaller than behind this shoulder.

7. Expansion screw as defined in one or several of claims 3 to 6, characterized in that the projection (20) is designed so as to be resiliently flexible transversely to its longitudinal direction so that it will be held by clamping in the mould recess (12).

8. Expansion screw as defined in claim 7, characterized in that on at least one of its longitudinal sides the projection (20) has a web (20b; 20d) which extends approximately in the longitudinal direction of the projection and is flexible transversely thereto.

9. Method as defined in claim 2, characterized in that to fix the projection in the mould recess, a curing composition is introduced into the latter, and the projection is thereupon inserted into the mould recess and the holder adjusted relative to the mould.

## Revendications

1. Dispositif pour encastrer un vérin (18), destiné à corriger une malposition dentaire, dans une plaque de matière plastique à confectionner d'une résine à couler sur un moule de coulée, comprenant un support de matière plastique (14) en forme de plaquette qui entoure le vérin et le maintient, et un moule de coulée présentant une surface de modelage (10) adaptée à la surface de la plaque de matière plastique à confectionner, **caractérisé en ce que**, pour fixer le support (14) au moule de coulée, le support présente une saillie (20) et le moule présente, dans sa surface de modelage (10), un évidement (12) pour insérer cette saillie (20).

2. Procédé pour encastrer un vérin (18), pourvu d'un support (14) et destiné à corriger une malposition dentaire, dans une plaque de matière plastique à confectionner d'une résine à couler sur un moule de coulée, selon lequel on fixe le support, et avec lui le vérin, sur une surface de modelage du moule de coulée en une position préfixée puis on applique la résine à couler sur le moule, **caractérisé en ce que** l'on pratique dans la surface de modelage (10) un évidement (12) pour l'insertion d'une saillie (20) prévue sur le support (14), on insère ensuite la saillie (20) dans cet évidement et on applique enfin la résine à couler sur le moule.

3. Vérin avec support (14) pour la mise en oeuvre du procédé selon la revendication 2, dont le support (14) est réalisé comme une plaquette de matière plastique entourant le vérin (18) et maintenant celui-ci, plaquette qui comporte une partie de maintien, située pendant l'utilisation du côté du vérin (18) éloigné du moule de coulée, ainsi qu'une seconde partie, située du côté opposé à la partie de maintien par rapport au vérin et se trouvant pendant l'utlisation entre le vérin (18) et la surface de modelage (10) du moule de couplée, **caractérisé en ce que** le support (14) est pourvu, sur le côté de sa seconde partie éloigné du vérin (18), d'une saillie (20) destinée à être insérée dans l'évidement (12) du moule de coulée.

4. Vérin selon la revendication 3, caractérisé en ce que la saillie (20) est formée sur la plaquette de matière plastique constituant le support.

5. Vérin selon la revendication 3 ou 4, caractérisé en ce que la saillie (20) est en forme de tenon.

6. Vérin selon une ou plusieurs des revendications 3 à 5, caractérisé en ce que saillie (20) présente, sur au moins l'un de ses côtés longitudinaux, en vue de la formation d'une butée coopérant avec l'évidement (12) du moule, un tel gradin (20a) que sa section est plus petite avant ce gradin - en direction de son extrémité libre - que derrière ce gradin.

7. Vérin selon une ou plusieurs des revendications 3 à 6, caractérisé en ce que la saillie (20) est réalisée pour être flexible élastiquement, transversalement à sa direction longitudinale, en vue de son maintien par serrage dans l'évidement (12) du moule.

8. Vérin selon la revendication 7, caractérisé en ce que la saillie (20) présente, sur au moins l'un de ses côtés longitudinaux, une branche (20b, 20d) orientée à peu près dans le sens de la longueur de la saillie et dotée d'élasticité transversalement à ce sens.

9. Procédé selon la revendication 2, caractérisé en ce que, pour fixer la saillie dans l'évidement du moule, on introduit dans cet évidement une masse durcissable puis on insère la saillie dans l'évidement et on ajuste le support par rapport au moule.
